Europäisches Patentamt

(19) European Patent Office

Office européen des brevets

(11) Numéro de publication: **0 094 326**
**B1**

(12) **FASCICULE DE BREVET EUROPEEN**

(45) Date de publication du fascicule du brevet:
11.09.85

(21) Numéro de dépôt: 83400970.6

(22) Date de dépôt: 11.05.83

(51) Int. Cl.⁴: **G 21 C 13/02**

(54) **Dispositif de fixation d'un appareil dans un réacteur nucléaire.**

(30) Priorité: **12.05.82 FR 8208219**

(43) Date de publication de la demande:
**16.11.83 Bulletin 83/46**

(45) Mention de la délivrance du brevet:
**11.09.85 Bulletin 85/37**

(84) Etats contractants désignés:
**BE DE GB IT LU NL**

(56) Documents cités:
**DE - B - 2 424 518**
**FR - A - 1 564 507**
**FR - A - 2 300 253**
**FR - A - 2 483 670**
**US - A - 2 890 009**
**US - A - 3 746 292**

(73) Titulaire: **NOVATOME, 20 Avenue Edouard Herriot,
F-92350 Le Plessis Robinson (FR)**

(72) Inventeur: **Pierrey, Jean-Louis, 7 rue du 8 mai 1945,
F-92340 Bourg-La-Reine (FR)**

(74) Mandataire: **Bressand, Georges et al, c/o CABINET
LAVOIX 2 Place d'Estienne d'Orves, F-75441 Paris
Cedex 09 (FR)**

## Description

La présente invention concerne un dispositif de fixation d'un ou plusieurs appareils essentiels contenus dans un réacteur nucléaire.

Certaines chaudières de centrale nucléaire sont constituées d'une enceinte de grande dimension renfermant le coeur du réacteur et divers appareils tels que pompes primaires, échangeurs intermédiaires, appareilage de commande ou de contrôle du coeur. Cette enceinte du réacteur peut être recouverte, à sa partie supérieure, par une dalle rigide et les divers appareils du réacteur peuvent être disposés dans l'enceinte en étant fixés, par leur partie supérieure, à cette dalle rigide. Ces appareils sont soumis à des efforts importants, à des déplacements lents provoqués par exemple par des chocs thermiques et à des vibrations provoquées par exemple par de écoulements de fluide. D'autre part, pour certains sites particuliers, on doit prévoir l'éventualité d'un séisme. Lors d'un séisme, les mouvements du sol se transmettent à la dalle rigide qui transmet des efforts et des mouvements importants aux appareils qui sont fixés sur elle. Un séisme peut par conséquent endommager la dalle rigide, les éléments de fixation des appareils sur la dalle rigide, les appareils eux-mêmes, ou encore les diverses liaisons de ces appareils entre eux, pouvant entraîner des ruptures de canalisations ou d'autres avaries.

L'invention vise un dispositif permettant de limiter les effets destructeurs pour les appareils ou pour la dalle, lors d'un séisme.

La présente invention concerne donc un dispositif de fixation d'un appareil disposé dans un réacteur nucléaire, dans lequel l'appareil traverse une dalle rigide de fermeture du réacteur nucléaire, et est suspendu à cette dalle par une bride en forme d'élargissement radial circonférential prévue à la partie superieure dudit appareil et par des elements élastiques.

Selon une caractéristique essentielle de cette invention, le dispositif de fixation, comporte une première série d'éléments élastiques montée entre l'une des faces de la bride et la face supérieure de la dalle et une seconde série d'éléments élastiques également montée entre l'autre face de la bride et une contre-bride elle-même fixée sur la dalle, de façon à maintenir la bride (6) de l'appareil entre la dalle et la contre-bride d'une manière élastique verticalement dans les deux sens.

Selon un mode de réalisation de cette invention, il est prévu que chaque élément élastique soit composé d'un empilement de rondelles élastiques coniques.

D'autres caractéristiques et avantages de l'invention apparaitront lors de la description détaillée de l'exemple de réalisation qui va suivre, illustré par les dessins annexés.

La figure 1 est une vue schématique, en coupe partielle, d'un dispositif de fixation conforme à l'invention.

La figure 2 représente un mode de réalisation d'un dispositif de fixation conforme à l'invention, en coupe partielle.

Les figures 3 et 4 représentent deux variantes de réalisation du dispositif de fixation conforme à l'invention.

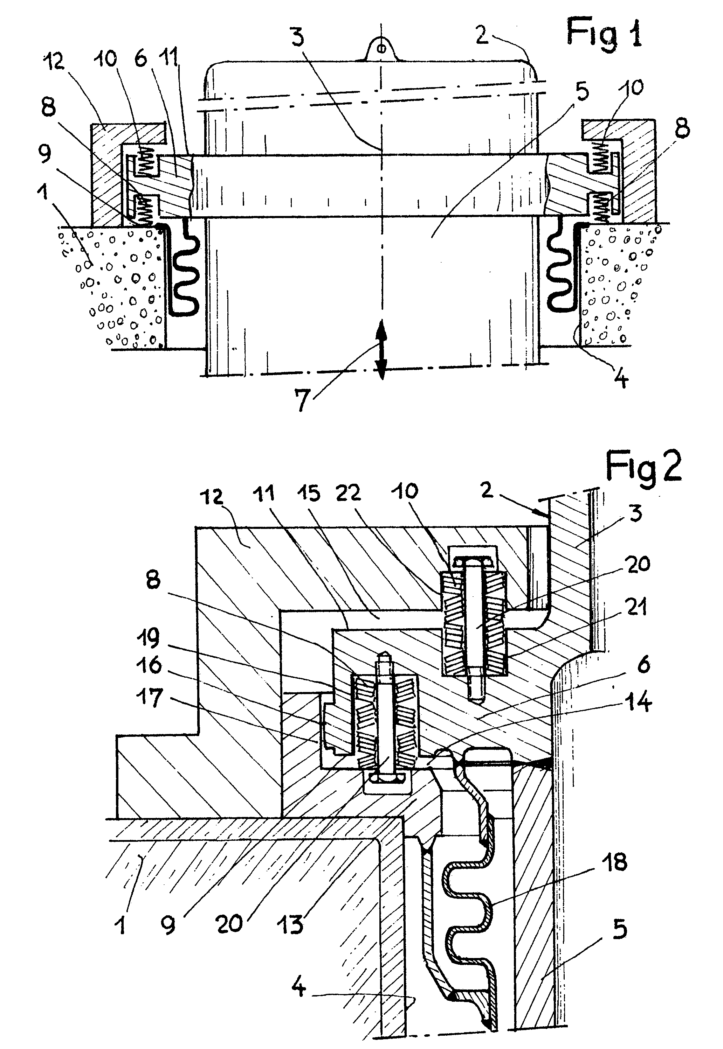

En se reportant à la figure 1, on distingue une dalle 1 de fermeture d'un réacteur nucléaire à neutrons rapides. Cette dalle est destinée à soutenir différents appareils nécessaires au fonctionnement du réacteur. On distingue, dans la figure 1, l'un de ces appareils 2, dont la partie supérieure 3 comporte des moyens de liaison de l'appareil avec la dalle 1. La dalle 1 comporte une ouverture 4 et l'appareil 2 peut être installé en l'amenant au-dessus de la dalle 1 et en introduisant son corps 5 dans l'ouverture 4. L'appareil 2 comporte, à sa partie supérieure 3, un élargissement radial 6 qui vient se fixer sur la dalle 1. L'invention concerne plus précisément l'agencement permettant d'établir la liaison entre l'élargissement radial 6 de l'appareil 2 et la dalle 1. Ce moyen de liaison doit être capable d'amortir élastiquement les mouvements de la dalle 1 qui peuvent se produire lors d'un séisme. En fait, il est apparu opportun de prévoir une liaison élastique entre la dalle 1 et l'appareil 2 entraînant des mouvements relatifs uniquement selon la direction verticale 7. Cette liaison élastique est réalisée à l'aide d'une première série de ressorts 8 interposées entre la face inférieure 9 de l'élargissement 6 et la face supérieure de la dalle 1, ainsi que par une deuxième série de ressorts 10 interposés entre la face supérieure 11 de l'élargissement 6 et une contre-bride 12 liée rigidement à la dalle 1. Ainsi, lors d'un séisme, les mouvements rapides ascendants ou descendants de la dalle 1 ne risquent pas de créer des contraintes trop importantes au niveau de la liaison de la dalle avec un appareil, puisque cette liaison est élastique. D'autre part, cette disposition autorise un léger débattement angulaire de l'appareil 2 par rapport à l'axe vertical 7. En effet, si l'appareil 2 est légèrement incliné, certains ressorts 8 se retrouvent plus comprimés que d'autres ressorts 8, mais, s'il est prévu un grand nombre de ressorts disposés tout autour de l'appareil, ils contribuent tout de même tous à soutenir l'appareil, et l'effort sur la dalle 1 reste relativement bien réparti tout autour de son ouverture 4. Selon la rigidité donnée aux ressorts 8 et 10 il est possible d'ajuster les fréquences d'oscillation de l'appareil supporté par le dispositif conforme à l'invention à des valeurs pour lesquelles les excitations d'origine sismique sont faibles. Ceci permet donc de protéger l'appareil lui-même des conséquences d'un séisme.

En se reportant maintenant à la figure 2, qui concerne un mode de réalisation particulier de l'invention, on distingue l'appareil 2 dont la partie inférieure 5 est enfilée à travers l'ouverture 4 de la dalle 1 et dont la partie supérieure 3 comporte une bride 6 en forme d'élargissement radial. Cette bride 6 comporte deux faces radiales parallèles 9 et 11. La face inférieure 9 de la bride 6 vient en appui vertical sur une pièce 13 liée rigidement à la dalle 1. La face supérieure 11 de la bride 6 vient en appui vertical vers le haut sur une pièce 12 liée elle aussi rigidement à la dalle 1. Le contact entre la bride 6 et les pièces 12 et 13 ne se fait toutefois pas directement mais par l'intermédiaire d'une série de ressorts 8 et une série de ressorts 10. Il existe en conséquence un certain espace 14 et 15, respectivement entre la bride 6 et les pièces supports 13 et 12. Ainsi, il est établi entre la bride 6 et la dalle 1 une liaison élastique verticalement.

La bride 6 comporte par ailleurs, sur sa partie périphérique, une surface sphérique 16 engagée avec un jeu minimum dans un alésage vertical 17 ménagé dans la pièce support 13. Ainsi, l'appareil 2 peut à la fois se déplacer verticalement par rapport à la dalle 1 et se déplacer en rotation grâce à la liaison du type rotule 16, 17.

Comme, le plus souvent, la dalle 1 doit constituer une couverture étanche du réacteur, il est utile de prévoir, entre l'appareil 2 et la dalle 1 un joint d'étanchéité. Ce joint d'étanchéité est réalisé ici, de façon connue en soi, à l'aide d'un soufflet 18 disposé verticalement entre le corps 5 de l'appareil 2 et l'ouverture 4 de la dalle 1, ce soufflet 18 étant relié de façon étanche, d'une part à l'appareil 2, d'autre part à la dalle 1 ou à la pièce support 13 liée elle-même de façon étanche à la dalle 1.

Les appareils 2 qui sont fixés de la sorte sur la dalle 1 sont en général de masse très grande, et les séries de ressorts 8 et 10 qui établissent la liaison élastique entre l'appareil 2 et la dalle 1 doivent par conséquent résister à des charges très élevées. Pour répondre à ce problème, les ressorts 8 et 10 sont, de préférence, réalisés à l'aide d'un empilement d'un certain nombre de rondelles élastiques coniques. On désigne communément ces rondelles comme étant du type »Belleville«. La réalistion des séries de ressorts 8 et 10 à l'aide d'un empilement de rondelles élastiques est très avantageuse parce qu'elle permet de constituer des ressorts possèdant exactement toutes les caractéristiques désirées, de longueur, de résistance, d'élasticité, etc..., en jouant uniquement sur le nombre des rondelles et sur la combinaison de rondelles empilées dans le même sens ou dans des sens opposés.

Dans l'exemple de réalisation illustré par le figure 2, la bride 6 de l'appareil 2 est de forme circulaire, et, par conséquent, les deux séries de ressorts 8 et 10 disposées de part et d'autre de la bride sont situées sur des cercles concentriques de diamètre $D_1$ et $D_2$ différents. De cette façon, on voit qu'aucun élément élastique 8 n'est co-axial avec l'élément élastique 10 opposé. Cela permet donc de réaliser une bride 6 d'encombrement et de poids plus faible.

On distingue encore, dans cet exemple de réalisation de la figure 2, que l'élément élastique 8, constitué de rondelles empilées, est disposé dans un trou borgne 19 ménagé dans la bride 6.

L'empilement de rondelles élastiques 8 est monté ainsi dans la bride 6 avant la mise en place de l'appareil 2, et est maintenu en position grâce à une vis 20 traversant axialement les rondelles élastiques 8 et venant se visser dans le fond du trou borgne 19. Bien sûr, la longueur de l'empilement de rondelles élastiques 8, en l'absence de toute charge, doit être supérieure à la longueur du trou borgne 19, de façon que, lors de la mise en place de la bride 6 au-dessus de la pièce support 13, il se crée un espace 14 permettant aux ressorts 8 d'établir la liaison élastique entre la bride 6 et le support 13, et par conséquent entre l'appareil 2 et la dalle 1. L'élément élastique 10 n'est pas monté de façon tout à fait identique à l'élément élastique 8, bien que cela revient exactement au même. On voit que l'élément élastique 10, constitué lui aussi d'un empilement de rondelles élastiques, a sa partie inférieure engagée dans un trou borgne 21 ménagé sur la partie supérieure de la bride 6, et a son autre extrémité engagée dans un trou borgne 22 ménagé dans la contre-bride 12. Cette disposition contructive est justifiée principalement par des considérations d'encombrement.

On peut choisir la longueur des vis 20 de façon que, lorsqu'elles sont montées, elles créent chacune dans l'empilement de rondelles 8 correspondent, une certaine précontrainte prédéterminée. De cette façon, l'appareil 2 est positionné de façon plus précise et plus rigoureuse par rapport à la dalle, 1 tout en restant lié avec une certaine élasticité. On peut aussi, bien sûr, créer une précontrainte semblable dans les éléments élastiques 10 supérieurs. On peut créer dans ces éléments élastiques 8 une précontrainte légèrement supérieure à la charge supportée par ces éléments 8 lorsque l'appareil repose sur la dalle. Dans ces conditions, la liaison entre l'appareil et la dalle se comporte comme une liaison rigide en mode de fonctionnement anormal, et présente toutefois une certaine élasticité en cas de surcharge due, par exemple, à un séisme.

Comme en général, le nombre d'éléments élastiques 8 ou 10 disposés sur la bride 6 est assez grand, il peut être préférable de remplacer les trous borgnes 19, 21, 22 ménagés dans la bride ou la contre-bride par des gorges annulaires ménagées de la même façon dans la bride ou la contre-bride et de même diamètre $D_1$ et $D_2$.

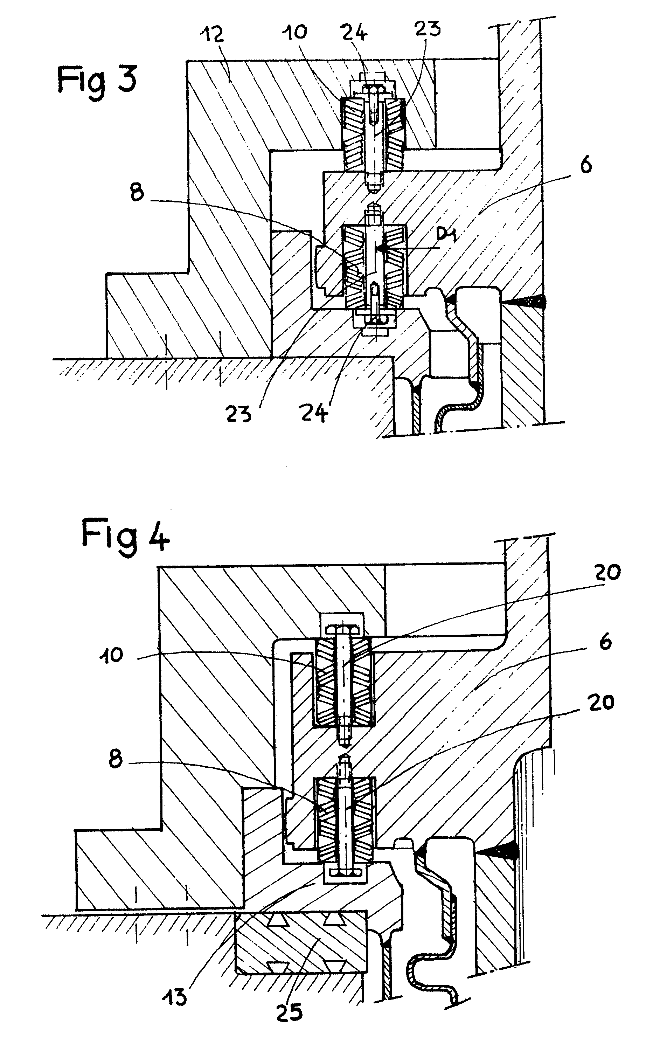

La figure 3 représente une variante de réalisation. Les empilements de rondelles 8 et 10 sont maintenus à l'aide de tiges 23 traversant les rondelles et vissées dans le fond des trous borgnes correspondants. L'extrémité extérieure de chaque tige 23 comporte un trou fileté dans lequel est visée une vis 24 qui retient les rondelles en exerçant sur elles, éventuellement, une précontrainte. D'autre part, les éléments élastiques 8 et 10 sont situés sur des cercles concentriques de même diamètre $D_1$. L'élément élastique 8 est disposé dans un trou ménagé dans la bride 6, et l'élément élastique 10 est disposé dans un trou ménagé dans la contre-bride 12. La figure 4 est une variante de réalisation de la figure 3 dans laquelle des éléments élastiques 8 et 10 sont tous deux disposés dans des trous ménagés dans la bride 6. Il peut alors être préférable, pour des questions d'encombrement, et de résistance de la bride 6, de décaler angulairement les éléments élastiques 8 par rapport aux éléments élastiques 10 de façon qu'ils ne se trouvent pas disposés coaxialement. La pièce support 13 peut être liée directement à la dalle 1, mais peut être aussi liée par l'intermédiaire d'une pièce d'ancrage 25. La contre-bride 12 peut être liée directement sur la dalle 1 mais peut être aussi montée sur la pièce support 13, comme représenté en figure 4.

Le dispositif de fixation conforme à l'invention permet d'effectuer le montage de l'appareil sur la dalle avec un minimum de difficulté et une grande fiabilité. Il permet d'autre part d'effectuer le démontage et le changement des éléments élastiques 8 ou 10 sans extraire totalement l'appareil de la dalle.

**Revendications**

1. Dispositif de fixation d'un appareil disposé dans un réacteur nucléaire dans lequel l'appareil traverse une dalle rigide de fermeture du réacteur nucléaire et est suspendu à cette dalle par une bride, en forme d'élargissement radial circonférentiel, prévue à la partie supérieure dudit appareil et par des éléments élastiques, caractérisé par le fait qu'une première série d'éléments élastiques (8) est montée entre l'une des faces (9) de la bride (6) et la face supérieure de la dalle (1) et qu'une seconde série d'éléments élastiques (10) est également montée entre l'autre face (11) de la bride (6) et une contre-bride (12) elle-même fixée sur la dalle (1), de façon à maintenir la bride (6) de l'appreil entre la dalle (1) et la contre-bride (12) d'une manière élastique verticalement dans les deux sens.

2. Dispositif de fixation selon la revendication 1, caractérisé par le fait que la bride (6) de l'appareil (2) est limitée périphériquement par une surface sphérique (16) engagée dans un alésage cylindrique (17) d'une pièce (13) liée rigidement à la dalle (1), formant ainsi une liaison à rotules entre l'appareil (2) et la dalle (1).

3. Dispositif de fixation selon l'une des revendications 1 ou 2, caractérisé par le fait que chaque élément élastique (8) ou (10) est constitué par un empilement de rondelles élastiques coniques d'axes perpendiculaires à la face supérieure de la dalle (1).

4. Dispositif de fixation selon l'une des revendications 1 à 3, caractérisé par le fait que la première série d'éléments élastiques (8) venant s'appuyer sur la dalle (1) est constituée d'éléments élastiques régulièrement répartis sur une ligne circulaire autour de l'appareil (2), et que l'autre série d'éléments élastiques (10) venant s'appuyer sur la contre-bride (12) est constituée d'éléments élastiques, eux aussi régulièrement répartis sur un cercle autour de l'appareil (2).

5. Dispositif de fixation selon la revendication 4, caractérisé par le fait que les première et deuxième séries d'éléments élastiques sont situées sur des cercles concentriques de même diamètre.

6. Dispositif de fixation selon la revendication 5, caractérisé par le fait qu'une série d'éléments élastiques est décalée angulairement par rapport à l'autre série, de façon qu'aucun élément élastique (8) ne soit coaxial avec un élément élastique (10) opposé.

7. Dispositif de fixation selon la revendication 4, caractérisé par le fait que les première et deuxième séries d'éléments élastiques sont situées sur des cercles concentriques de diamètres différents (D1, D2), de façon qu'aucun élément élastique ne soit coaxial avec un élément élastique opposé.

8. Dispositif de fixation selon la revendication 3, caractérisé par le fait que chaque empilement de rondelles élastiques coniques est engagé dans un trou cylindrique borgne (19) et que la longueur de l'empilement de rondelles est supérieure à la longueur du trou borgne (19), de façon que l'extrémité libre de l'empilement vienne s'appuyer sur la dalle, ou, de l'autre côté, sur la contre-bride (12).

9. Dispositif de fixation selon la revendication 3, caractérisé par le fait que chaque empilement de rondelles élastiques coniques est engagé, d'une part, dans un trou borgne (21) ménagé dans la bride (6), et d'autre part, dans un trou borgne (22) ménagé dans une pièce (12) ou (13) liée rigidement à la dalle (1).

10. Dispositif de fixation selon l'une des revendications 8 ou 9, caractérisé par le fait que chaque empilement de rondelles élastiques est maintenu dans la bride (6) de l'appareil (2) par une vis axiale (20, 23, 24) vissée dans le fond du trou borgne correspondant.

11. Dispositif de fixation selon la revendication 10, caractérisé par le fait que ledit empilement de rondelles élastiques est maintenu sous précontrainte à l'aide des vis (20, 23, 24), cette précontrainte étant de préférence légèrement supérieure à la charge statique due au poid de l'appareil.

12. Dispositif de fixation selon l'une des revendications 3 à 7, caractérisé par le fait que les éléments élastiques (8 ou 10) sont montés dans des gorges annulaires correspondantes ménagées dans la bride (6) ou la contre-bride (12).

**Patenansprüche**

1. Befestigungsvorrichtung für ein in einem Kernreaktor angeordnetes Gerät, in dem das Gerät eine starre Schließplatte für den Kernreaktor durchquert und an dieser Platte aufgehängt ist durch einen Flansch in Form einer am Oberteil des Geräts befindlichen radialen Umfangserweiterung und durch elastische Elemente, dadurch gekennzeichnet, daß eine erste Reihe von elastischen Elementen zwischen einer der Seiten (9) des Flansches (6) und der Oberseite der Platte (1) angeordnet ist und daß eine zweite Reihe von elastischen Elementen (10) ebenfalls zwischen der anderen Seite (11) des Flansches (6) und einem seinerseits an der Platte (1) befestigten Gegenflansch (12) angeordnet ist, und zwar derart, daß der Flansch (6) des Geräts zwischen der Platte (1) und dem Gegenflansch (12) in beiden Richtungen elastisch und senkrecht gehalten ist.

2. Befestigungsvorrichtung nach Anspruch 1, dadurch gekennzeichnet, daß der Flansch des Geräts (2) am Umfang durch eine Kugelfläche (16) begrenzt ist, die in eine zylindrische Bohrung (17) eines mit der Platte (1) starr verbundenen Teils (13) eingesetzt ist und somit zwischen dem Gerät (2) und dem Deckel (1) eine Kugelgelenkverbindung bildet.

3. Befestigungsvorrichtung nach einem der Ansprüche 1 oder 2, dadurch gekennzeichnet, daß jedes elastisches Element (8 oder 10) durch einen Stapel aus elastischen kegelförmigen Scheiben gebildet ist, deren Achsen zur Oberseite der Platte (1) senkrecht sind.

4. Befestigungsvorrichtung nach einem der Ansprüche 1 bis 3, dadurch gekennzeichnet, daß die an der Platte (1) anliegende erste Reihe von elastischen Elementen (8) aus elastischen Elementen besteht, die auf einer um das Gerät verlaufenden kreisförmigen Linie gleichmäßig verteilt sind, und daß die am Gegenflansch (12) anliegende andere Reihe von elastischen Elementen (10) aus elastischen Elementen besteht, die ihrerseits auch auf einem um das Gerät verlaufenden Kreis gleichmäßig verteilt sind.

5. Befestigungsvorrichtung nach Anspruch 4, dadurch gekennzeichnet, daß die ersten und zweiten Reihen von elastischen Elementen sich auf konzentrischen Kreisen mit gleichem Durchmesser befinden.

6. Befestigungsvorrichtung nach Anspruch 5, dadurch gekennzeichnet, daß eine Reihe von elastischen Elementen gegenüber der anderen Reihe derart im Winkel versetzt ist, daß kein elastisches Element mit dem gegenüberliegenden elastischen Element (10) koaxial ist.

7. Befestigungsvorrichtung nach Anspruch 4, dadurch gekennzeichnet, daß die ersten und zweiten Reihen von elastischen Elementen sich auf konzentrischen Kreisen mit unterschiedlichen Durchmessern (D1, D2) derart befinden, daß kein elastisches Element mit dem gegenüberliegenden elastischen Element koaxial ist.

8. Befestigungsvorrichtung nach Anspruch 3, dadurch gekennzeichnet, daß jeder Stapel von elastischen kegelförmigen Scheiben in eine zylindrische Sacklochbohrung (19) eingesetzt ist, und daß die Länge jedes Stapels von Scheiben größer als die Länge der Sacklochbohrung ist, und zwar derart, daß das freie Ende des Stapels an der Platte oder auf der anderen Seite am Gegenflansch (12) anliegt.

9. Befestigungsvorrichtung nach Anspruch 3, dadurch gekennzeichnet, daß jeder Stapel von elastischen kegelförmigen Scheiben eingesetzt ist: einerseits in eine im Flansch (6) ausgebildete Sacklochbohrung (21) und andererseits in eine Sacklochbohrung (22), die in einem mit der Platte (1) starr verbundenen Teil (12 oder 13) ausgebildet ist.

10. Befestigungsvorrichtung nach einem der Ansprüche 8 oder 9, dadurch gekennzeichnet, daß jeder Stapel von elastischen Scheiben im Flansch (6) des Geräts (2) durch eine axiale Schraube (20, 23, 24) gehalten ist, die in den Boden der entsprechenden Sacklochbohrung geschraubt ist.

11. Befestigungsvorrichtung nach Anspruch 10, dadurch gekennzeichnet, daß der Stapel von elastischen Scheiben durch Schrauben (20, 23, 24) unter Vorspannung gehalten ist, wobei diese Vorspannung vorzugsweise geringfügig größer als die durch das Gewicht des Geräts bedingte statische Last ist.

12. Befestigungsvorrichtung nach einem der Ansprüche 3 bis 7, dadurch gekennzeichnet, daß die elastischen Elemente (8 oder 10) in entsprechenden Ringnuten angeordnet sind, die im Flansch (6) oder im Gegenflansch (12) ausgebildet sind.

**Claims**

1. A device for fixing an apparatus disposed in a nuclear reactor in which the apparatus extends through a rigid closing slab of the nuclear reactor and is suspended from said slab by a flange in a shape providing a radial and circumferential enlargement, provided in the upper part of said apparatus, and by elastically yieldable elements, caracterized in that a first series of elastically yieldable elements (8) is mounted between one of the sides (9) of the flange (6) and the upper side of the slab (1) and a second series of elastically yieldable elements (10) is also mounted between the other side (11) of the flange (6) and a counter-flange (12) which is itself fixed to the slab (1) so as to maintain the flange (6) of the apparatus between the slab (1) and the counter-flange (12) in a vertically elastically yieldable manner in both directions.

2. A fixing device according to claim 1, caracterized in that the flange (6) of the apparatus (2) is preferably defined by a spherical surface (16) engaged in a cylindrical bore (17) of a member (13) rigidly fixed to the slab (1), thereby forming a swivel connection between apparatus (2) and the slab (1).

3. A fixing device according to claim 1 or 2, caracterised in that each elastically yieldable element (8) or (10) is constituted by a stack of elastically yieldable conical washers having axes perpendicular to the upper side of the slab (1).

4. A fixing device according to one of the claims 1 to 3, caracterised in that the first series of elastically yieldable element (8) bearing against the slab (1) is constituted by elastically yieldable elements evenly spaced apart on a cirular line around the apparatus (2), and the other series of elastically yieldable elements (10) bearing against the counter-flange (12) is constituted by elastically yieldable elements which are also evenly spaced apart on a circle around the apparatus (2).

5. A fixing device according to claim 4, caracterised in that the first and second series of elastically yieldable elements are located on concentic circles having the same diameter.

6. A fixing device according to claim 5, caracterised in that one series of elastically yieldable elements is angularly offset relative to the other series so that no elastically yieldable element (8) is coaxial with an opposed elastically yieldable element (10).

7. A fixing device according to claim 4, caracterised in that the first and second series of elastically yieldable elements are located on concentric circles having different diameters (D1, D2) so that no elastically yieldable element is co-axial with an opposed elastically yieldable element.

8. A fixing device according to claim 3, caracterised in that each stack of conical elastically yieldable washers is engaged in a blind cylindrical aperture (19) and the length of the stack of washers exceeds the length of the blind aperture so that the free end of the stack bears against the slab or, on the other side, against the counter-flange (12).

9. A fixing device according to claim 3, caracterised in that each stack of conical washers is engaged, on one hand, in a blind aperture (21) formed in the flange (6), and, on the other hand, in a blind aperture (22) formed in a member (12) or (13) rigidly connected to the slab (1).

10. A fixing device according to claim 8 or 9, caracterised in that each stack of elastically yieldable washers is maintained in the flange (6) of the apparatus (2) by an axial screw (20, 23, 24) screwed into the bottom of the corresponding blind aperture.

11. A fixing device according to claim 10, caracterised in that said stack of elastically yieldable washers is maintained under stress by means of the screws (20, 22, 24), this prestressing being preferably slightly greater than the static load due to the weight of the apparatus.

12. A fixing device according to one of the claims 3 to 7, caracterised in that the elastically yieldable elements (8 or 10) are mounted in corresponding annular grooves formed in the flange (6) or the counter-flange (12).

0 094 326

Fig 1

Fig 2

0 094 326

Fig 3

Fig 4

9